# EUROPEAN PATENT SPECIFICATION

(11) **EP 2 781 650 B1**
(45) Date of publication and mention of the grant of the patent: **19.06.2019**
(21) Application number: 14161237.4
(22) Date of filing: 24.03.2014
(51) Int. Cl.: D07B 1/14, A01K 73/12, A01K 74/00, A01K 75/00, D04C 1/12

(54) **Light emitting fishing ropes and use thereof**
Lichtemittierende Fischereiseile und Verwendung dafür
Cordes de pêche émettant de la lumière et leur utilisation

(30) Priority: 22.03.2013 NL 2010505
(43) Date of publication of application: 24.09.2014
(73) Proprietor: Lankhorst Euronete Portugal, S.A., 4471-909 Maia (PT)
(72) Inventor: de Loos, Femke, 8607 AD Sneek (NL); Wensink, Bennie, 8607 AD Sneek (NL)
(74) Representative: V.O.

(56) References cited:
- WO-A2-01/35729
- CH-A5- 674 967
- JP-A- S63 233 738
- US-A1- 2003 206 419
- US-A1- 2011 134 635
- DATABASE WPI Week 200512 Thomson Scientific, London, GB; AN 2005-104600 XP002726847, -& JP 2005 008687 A (TDO GRAPHICS KK) 13 January 2005 (2005-01-13)
- DATABASE WPI Week 200155 Thomson Scientific, London, GB; AN 2001-499203 XP002726848, -& JP 2001 131829 A (UNITIKA LTD) 15 May 2001 (2001-05-15)
- DATABASE WPI Week 200032 Thomson Scientific, London, GB; AN 2000-369768 XP002726849, -& JP 2000 120648 A (ASAHI INTECH KK) 25 April 2000 (2000-04-25)
- R D Galbraith ET AL: "An Introduction to Commercial Fishing Gear and Methods Used in Scotland Fisheries Research Services", , 1 January 2004 (2004-01-01), XP055320324, Retrieved from the Internet: URL:http://www.gov.scot/uploads/documents/ fishing_gear.pdf [retrieved on 2016-11-17]

## Description

### BACKGROUND OF THE INVENTION

The invention is in the field of light-emitting ropes that can be used in commercial fishery. In particular the invention is in the field of improvements to ropes used in fly shoot fishing.

Fly shoot fishing (sometimes also called fly dragging or Scottish seining) is considered to be a more sustainable alternative for bottom trawling. Fly shoot fishing is a type of seine fishing (or seine-haul fishing), a method of fishing that employs a seine or dragnet. Fly shoot fishing uses a Danish seine, also called an anchor seine, which comprises a conical net with two long wings with a bag where the fish is collected. Drag lines extend from the wings, and are long so they can surround an area. A Danish seine is similar to a small trawl net, but the wire warps are much longer and there are no otter boards. The seine boat drags the warps and the net in a circle around the fish. The motion of the warps and subsequent dust cloud generated herds the fish into the central net. A brightly colored buoy, anchored as a marker, serves as a fixed point when hauling the seine. A power block, usually mounted on a boom or a slewing deck crane present on the fishing boat, hauls the seine net. The net is deployed, with one end attached to an anchored dhan (marker) buoy, by the main vessel, the seiner, or by a smaller auxiliary boat. A drag line is paid out, followed by a net wing. As the seiner sweeps in a big circle returning to the buoy, the deployment continues with the seine bag and the remaining wing, finishing with the remaining drag line. In this way a large area can be surrounded. Next the drag lines are hauled in using rope-coiling machines until the catch bag can be secured.

Fly shoot fishing is very similar to seine fishing, but does not rely on an anchor but rather uses the vessel's own power to maintain its position while hauling the ropes and net. Fly shoot fishing is particularly useful for catching round fish (whiting, haddock, cod, *etc.*). Fly shoot fishing is a more fuel-efficient method than trawling and usually yields a better quality of end product due to the short time that the fish are in the net before being taken aboard the boat.

WO-A-01/35729, CH-A-0 674 967, JPS63233738, US2003/206419 and US2011/134635 describe ropes that contain luminescent materials. These known ropes are luminescent to some extent, but generally the luminescence is insufficient for practical purposes, in particular for fishing purposes described herein. JP 2005-8687 A discloses a luminescent rope for fishing comprising luminescent yarns made of polyethylene terephthalate (PET) mixed with luminescent material.
The present invention seeks to provide fishing ropes that have improved luminescence.

The present invention seeks to provide ropes having improved luminescence for ropes used in fishery. In particular the present invention seeks to provide ropes that have a long after-glow time so that application in fields such as fly-shoot fishing is enabled.

### BRIEF SUMMARY OF THE INVENTION

One of the drawbacks of the existing fly shoot techniques is that it is limited to daylight operation because it relies on the visibility of the rope and/or the dust clouds, in particular the visibility from the perspective of the fish. This means that fly shoot fishing can only be carried out for a limited period of time. In particular in winter time the hours of sufficient visibility are very limited. This detracts considerably from the economic feasibility of fly shoot fishing. The present invention also aims to provide a solution to this problem.

Thus, the present invention is directed to a fishing rope according to claim 1. Surprisingly it was also found that this not only results in fishing equipment that allows for fly shoot fishing during dark or semi-dark periods (such as dusk or dawn), but also results in an improved yield, also during day-light periods. Yields may be improved to as much as up to 20% or more.

In addition, the present inventors found that other types of fish may be caught using the ropes of the present invention compared to fly shoot fishing using ordinary ropes. The use of the fishing ropes in accordance with the present invention, and as claimed in claim 10, results in the catch of demersal fish species, *viz.* fish species that live and feed on or near the bottom of the sea or lakes. These species are not limited to just strictly benthic species (such as flounder, sole, turbot, plaice and halibut) but also benthopelagic fish, *i.e.* fish that can float in the water column just above the sea bottom.

### BRIEF DESCRIPTION OF THE DRAWINGS

Figure 1 is a schematic representation of the technique of fly shoot fishing using the ropes in accordance with the present invention.
Figure 2 shows, schematically, a detail of a rope in accordance with the invention.
Figure 3 shows a schematic example of an fishery application in accordance with the present invention.

### DETAILED DESCRIPTION OF THE INVENTION

In accordance with the present invention there is provided a rope, such as a fishing rope, which is provided on at least part of its outer surface with a luminescent material. The resulting luminescent rope is visible under water. The emitted light is preferably strong enough to also illuminate the dust clouds that are produced by the moving rope. As a result the fish will be alerted and will be herded so that they eventually may be captured in the net.

The luminescent material is chosen such that it emits light in visible wavelengths, typically 390 - 750 nm. In accordance with the invention the ropes can be made luminescent in a number of ways.

One possibility is to twine conventional yarns, advantageously polyolefinic yarns together with yarns that are luminescent. Such luminescent yarns can be made by extruding a film of a mixture of polymers comprising polyester and a phosphorescent masterbatch containing phosphorescent material. The yarn can also be produced by co-extrusion of one or more non-phosphorescent layers with one or more phosphorescent layers to reduce cost and maximize the exposure of the phosphorescent pigments on the outer side of the ropes.

Suitable phosphorescent materials are for instance compounds selected from the group consisting of radioisotopes; organic dyes; and combinations thereof.

The phosphorescent compounds may also be selected from compounds having a relatively short after glow time, such as copper, silver, bismuth activated (zinc) sulfides or combinations thereof; and compounds having a longer after glow time, such as rare earth doped alkaline earth aluminates, alkaline earth sulfides, alkaline earth silicates, or combinations thereof; as well as combinations of these compounds. The compounds having a longer after glow time typically contain strontium, calcium, barium, magnesium, yttrium oxides or a combination, combined with silicates, aluminates or sulfides. Preferably these compounds are activated by rare earth elements, such as europium, dysprosium, terbium, thulium, or combination thereof.

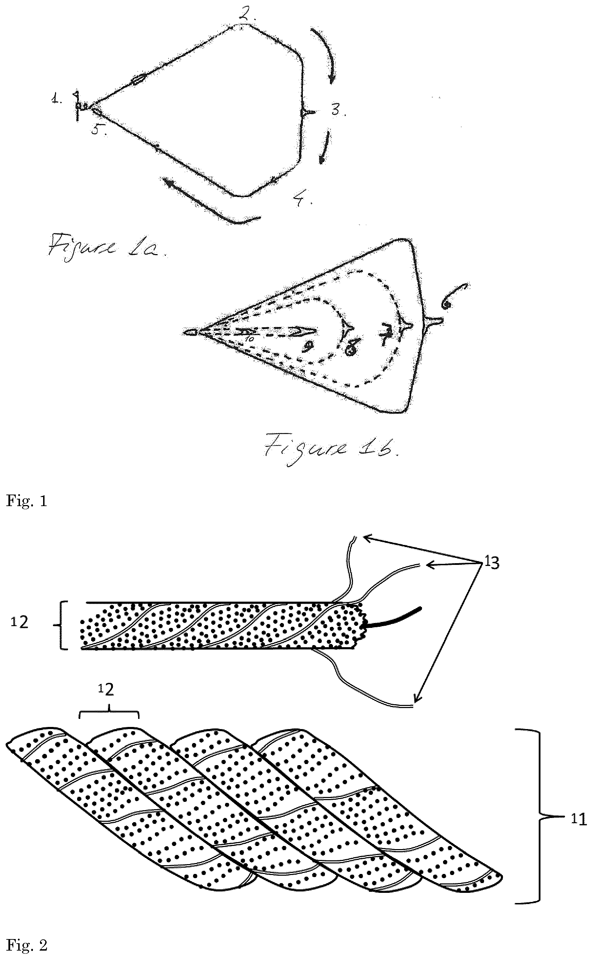

The extrusion can be of monofilaments of different geometries or cross-sections which can maximize the exposure of the phosphorescent pigments such as round, oval or flat. Apart from monofilaments the extrusion step can also produce multifilaments. This can be achieved by choosing an appropriate die in the extrusion step. Also, the compounds can be extruded onto a film, which step may be followed by a step of slitting the film in tapes. Both monofilaments, multifilaments or slit tapes may be subsequently stretched to increase the mechanical properties of these fibers, in particular the mechanical properties in the longitudinal direction. The resulting fibers can then be directly used in a strand by twisting it together with other rope-yarns or first be twisted on its own to make a yarn before it is combined with the other rope yarns. Strands of rope yarns including the phosphorescent yarns can be used to construct a rope. An example of this is given in figure 2, which is a schematic representation of a rope according to the invention. In this figure a four-strand rope (11) is shown, which comprises four single strands (12), which are typically made of polyolefin yarns, wherein each strand contains on its outside several (in this case three) luminescent yarns (13).

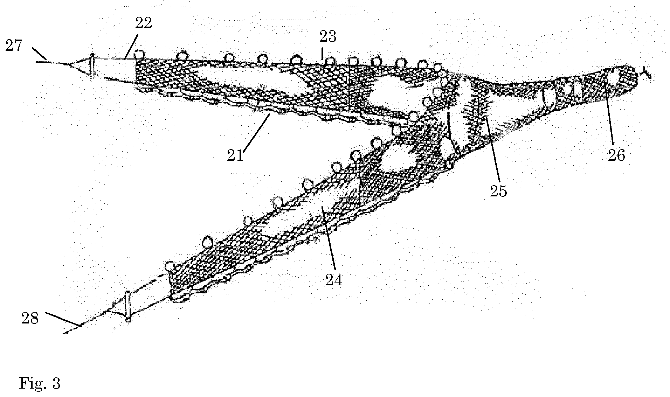

Other examples of applications that may benefit from the ropes of the present invention is described with reference to figure 3, which schematically shows the different elements of a typical fishing net.

Possible fishing rope applications include footropes (21), also referred to as groundropes or fishing lines. These are typically twisted or braided multiply combination ropes (containing typically steel wires), such as three, four, six, eight, twelve, 16, 24 or 36 strands combination ropes. These ropes may be combined with a chain for weight, typically twisted or braided multiply ropes. Normally these contain no steel wires.

Bridels (22), which are a combination of rope or ropes constructions, similar to footropes. Sometimes these ropes include high performance fibers, such as ultra-high-molecular-weight polyethylene (UHMWPE) fibers commercialized as Dyneema™.

Headropes (23) or headlines, which contain three or more laid or braided ropes or twines. These are typically synthetic ropes, which are normally not combined with other materials.

Wings of the netting (24), such as knotless nets, knotted nets or spliced eye nets, which are based on laid or braided ropes or twines. These ropes or twines contain three, twelve, 16, up to 36 strands and are optionally covered with a braid.

Middle part of netting (25), typically including an escape panel, which may be square. The construction is similar to that of wings.

Codend (26), which are similar to wings, but normally do not use spliced eye nets.

Warps (27) or flyshoot-ropes (28) (also known as seine lines) can be made of synthetic material and are increasingly used to replace steel wire warps. The construction is typically a core and one or more mantles. The core is typically braided, laid or parallel, whereas the mantle can be braided and can contain multiple layers. High strength and stiff performance fibers can be used in the core. Flyshoot-ropes (28) are normally combination ropes of up to 36 strands, having a braided cover. Flyshoot/seine netting lines (27, 28) can be very long, up to 1000 meters or more.

The ropes of the present invention can be used in different types of netting, such as surrounding nets (e.g. purse nets and ring nets), seine nets (e.g. beach seines, Scottish seines, Danish seines, anchor seines and pair seines), trawl nets (e.g. beam trawl, otter trawl, pair trawl, multi rig trawls, pelagic trawls and pelagic pair trawls), dredges (e.g. scallop dredges), gill nets (*e.g.* trammel nets and drift nets), traps (*e.g.* pots, creels and fyke nets).

The luminescent materials that are used in accordance with the present invention can be phosphorescent materials. Phosphorescence and fluorescence is caused by excited electrons which when returning to their ground state emit a photon. In fluorescence, the electrons go directly to their ground state emitting photons instantaneously but in phosphorescence electrons go through an intermediate state. Electrons can take a longer time in this intermediate state and thus photons emitted due to the energy liberated by the returning electron can be released over time, generating a steady stream of photons to create the phosphorescent effect. As electrons return to their ground state, less electrons become available to produce photons and the effect fades away with time.

Generally speaking, there are two types of phosphorescent materials, self-exciting ones which derive from radioactive materials in decay releasing energy in the form of photons or the ones that require an external source of energy for the electrons to be excited. Typical radioactive sources are radium, but radioactive source based materials are less preferred. There are two types of non-radioactive phosphorescent materials. The first kind is based on zinc sulfides. The second type are based on doped rare earth metals such as strontium aluminate. The former have very low light intensity and short emitting times. The strontium aluminate pigments have a much higher intensity and a longer emitting times and are therefore more preferred..

The phosphorescent effect can for instance be obtained by applying a paint or coating, an added part like a tag or a label or a strand in the rope via extrusion and blending. Normally these pigments are produced at temperatures much higher than typical extrusion temperatures and they do not lose any properties upon processing. They can nevertheless be incompatible with some pigments used in polymer coloring such as heavy metal containing pigments. Polymers with a high transparency or low crystallinity favor the transmission of incoming exciting radiation and of photons exciting the matrix.

The radiation used to excite the phosphorescent materials can be from different wavelength. UV light is an effective excitation source, hence black lamps are the best sources, followed by fluorescent lamps and finally incandescent lamps.

Pigment particle size also may have an effect on the brightness achieved by the pigmented products of the invention, with larger particles giving a brighter effect. Nevertheless, hiding power and dispersion characteristics decrease as the particles become bigger. Bigger particles are also less compatible with spinning and stretching of high tenacity fibers used in the ropes and yarns industry. For this reason, preferred pigment particles for oriented fibers have a d50 (*i.e*. the size of half the number of particles present) of 20 to 25 microns.

Very suitable pigments are described for instance in EP0622440, incorporated herein in its entirety. In particular, the luminescent material is preferably a phosphorescent phosphor, which comprises a matrix of formula MAl₂O₄, wherein M is calcium, strontium or barium. More preferably this phosphor is doped with at least one rare earth element. Preferably this rare earth element is selected from lanthanum, cerium, praseodymium, neodymium, samarium, gadolinium, terbium, dysprosium, holmium, erbium, thulium, ytterbium, lutetium, manganese, tin, bismuth and combinations thereof. Also preferred is a phosphor comprising a matrix of formula (M'*ₓ*M"*_{y}*)Al₂O₄ wherein *x* + *y* = 1 and M' and M", which are different, are each a metal selected from calcium, barium, strontium and magnesium. Such products are for instance commercially available by the tradename LumiNova™, obtainable from Nemoto (JP).

In another embodiment, the phosphorescent compound has formula MAl₂O₄, wherein M is chosen from Sr, Ba and Ca, and wherein the phosphorescent compound has been doped with at least one rare earth element.

Preferably the amount of luminescent material is from 0.1 to 50 wt.% of the total weight of the luminous strands, more preferably 0.5 to 20 wt.%, more preferably from 1 to 10 wt%, even more preferably from 2 to 8 wt.%.

Instead of phosphorescent materials, which absorb energy and release it relatively slowly in the form of light over a period of time, also fluorescent materials can be used, which emit light at a shorter time interval, typically tens of nanoseconds. Combinations of phosphorescent and fluorescent materials can also be used in order to obtain different colors which might under water enhance the reaction of fish to the dust cloud or rope.

In one embodiment not according to the present invention the ropes are covered on at least part of their outside with a layer of luminescent dye, such as a phosphorescent dyes, coatings or inks. This may be done for instance by applying a coating containing phosphorescent pigments, wrapping a film or tape around the rope containing a phosphorescent pigment.

A further possibility not according to the present invention is to use electricity to generate light, for instance by employing light emitting diode (LED) techniques. This can be done for instance by using monofilaments that contain small LEDs, incorporated in the rope structure. Organic LEDs (OLEDs) can be used for this purpose as well.

The luminescent yarns and strands are used in the construction of synthetic ropes constructed by braiding (interlacing) or laying (twisting). Typically, multiple strands or yarns are braided or laid together to form subropes or ropes. Multiple subropes can be further braided or laid into ropes. Furthermore, but not according to the invention, the luminescent materials can also be used in a braided mantle surrounding the rope or in combination ropes that combine steel and synthetic materials in one construction or in steel ropes, mainly containing steel wires.

The ropes of the invention can be very suitably employed in fly shoot fishing, as well as in other types of fishing. With reference to figure 1, fly shoot fishing in a typical embodiment of the invention may be carried out as follows. One end of the ropes is shot (1), with a buoy (the dhan) attached. The vessel then steams round, typically in a roughly triangular shaped course, as schematically depicted in figure 1a, shooting one set of the ropes (2). This first set of ropes is typically 2000-3500 m long, but may be shorter. When the vessel is approximately half way round, the net is dropped (3). Then the second set of ropes (4), which is also typically 2000-3500 m long. Then the vessel finishes close to the dhan, picking it up (5), leading both ropes to the winch and starting to tow the gear. Steps (1) to (5) are illustrated in figure 1a.

After that the vessel will tow until strain is on both ropes, then engage the winch to begin heaving slowly. At this stage the vessel is moving ahead at about one or two knots, the winch speed is gradually increased, from typically 15 meter per minute to begin with to about typically 100 meter per minute, when around half the ropes are in and the gear has closed up. At this stage the vessel is maintaining its position or getting hauled astern by the net. When all the ropes are in, the net is usually hauled aboard using a power block, the fish emptied into a deck pound or hopper and the gear made ready for the next shot. This process is schematically depicted in figure 1b, wherein the ropes are initially in the position as they are shot (6), then the towing is started (7), the ropes are hauled slowly (8), the hauling is speeded up and the net begins to close (9), and finally the net is completely closed and ready to be hauled aboard (10).

During the procedure, the ropes roll across the bottom of the sea, resulting in locally produced dust clouds, which disturb the fish. This and the visibility of the rope itself result in the fish being disturbed and eventually staying within the circumference of the moving ropes. Eventually the fish end up in the net and the net is then hauled aboard.

The invention can be used for catching a variety of fish, as mentioned above. Species of fish that are particularly interesting from an economical point of view include flatfish like plaice, in particular European plaice (*Pleuronectes platessa*), common dab (*Limanda limanda*), flounders, soles, turbot and halibut, and codfishes like cod, haddock, whiting, and pollock, and others like smallscaled gurnards, herring, snapper, and surmullet (*Mullus surmuletus*).

The invention is not limited to use in fishing benthic and benthopelagic fish, but can also be used in pelagic fishing.

Pelagic fish live near the surface or in the water column of coastal, ocean and lake waters, but not on the bottom of the sea. They can be contrasted with demersal fish, which do live on or near the sea bottom, and reef fish which are associated with coral reefs.

The use of the ropes in accordance with the present invention thus provides for a very efficient fishing method. In addition the quality of the fish caught is excellent, because the method is gentle and minimizes the catch of debris that could damage the fish. Also because the fish are actually caught in the net in the last part of the fly fishing procedure damage to the fish is minimized. When the fish is brought on board it is still alive, which also contributes to the quality of the fish. Furthermore, since the method of the invention only results in some very minor disturbance to the surface thereof, no harm is done to the sea bed, which contributes to the sustainability of the invention. The method of the invention is also very selective, resulting in minimal bycatch. This makes the method economically very feasible. In addition, selection on size/age of the fish takes place because small and/or young fish are not strong and fast enough to catch up with the big fish and cannot manage to stay inside the decreasing circle of the fishing gear. As a result they do not end up in the catch.

The ropes of the present invention can also be used in fishing nets, such as in trawls and purse seine nets by providing on at least part of their outer surface a luminescent material.

The ropes may also be used in non-fishing applications, but not according to the present invention, such as underground applications, such as mining, where they can be used as mining ropes, general purpose winch and work ropes, guide lines, pulling lines, and the like. In these underground applications the ropes find use because of the limited light conditions. For underground applications the ropes can be made of polyolefins, however preferably for underground applications the ropes are made of polymers other than polyolefins like polyesters, polyamides, LCPs (liquid crystal polymers), polyaramids or combinations thereof.

The ropes of the present invention typically are based on polyamides, polyesters, polyolefins, or combinations thereof. In the prior art, ropes made from these materials are normally haze/opaque, viz. non-transparent, which is the result of the fact that their production normally comprises a high orientation (typically the result of stretching). The high orientation results in the presence of both crystalline and amorphous phases in the polymer which reduce transparency due to the different optical properties of these phases. The present inventors realized that this is a disadvantage when providing luminescent ropes, because the lack of transparency will hamper proper light emission. It is advantageous to develop ropes containing the usual synthetic strands for mechanical properties and containing phosphorescent strands having a higher transparency and more efficient phosphorescence. According to the invention, the luminescent yarns comprise polyesters. For this reason low transparency polypropylene is less preferred, since it easily becomes haze/opaque upon stretching. High transparency polypropylene can be produced using specific production processes as used in the production of transparent packaging. The other polymers mentioned above (polyamides; and non-polypropylene polyolefins, such as polyethylene) are therefor more preferred. For this reason, polyethylene terephthalate (PET), and to a lesser extent polylactic acid (PLA) and poly(methyl methacrylate) (PMMA) are preferred polymers for providing the starting materials of the luminous strands of the ropes in accordance with the present invention. Both PET and PLA exhibit high transparency in their amorphous state and the orientation step used to increase their mechanical properties can reduce this preferred optical properties.

In order to improve transparency, and according to the invention, substantially lower stretch ratios may be used than is common in the prior art for preparing ropes of these materials. Although lower stretch ratios may result in lower mechanical properties, in particular with respect to tensile strength and elasticity (E-module), the present inventors realized that for most applications, in particular for applications in fishery, this is not problematic, and this perceived disadvantage is compensated by the advantages of improved transparency, resulting in better visibility when the ropes are made luminescent in accordance with the present invention. Field tests of this invention have also shown that abrasion of the surface of the fibers can reduce the transmission of light and hence efficiency of the luminous effect. A reduction in the orientation stage as described above has also been found to be beneficial to the tribological behavior of the fibers increasing the lifetime of the luminous effect.

Another possibility according to the invention to improve transparency, and by result visibility, is to use faster cooling after extrusion, i.e. cooling that is faster than is common in the prior art. Without wishing to be bound by theory, it is believed that faster cooling results in less formation of crystalline material, resulting in a more amorphous product, which is more transparent.

Apart from applications in fishery, but not according to the invention, the ropes of the present disclosure can find excellent use as tugging or mooring ropes, for instance for use with cruise ships. Towing vessels is a nightly towing operation could very well visualize the connecting line. When a vessel is moored the mooring lines will run across the deck and partly across the quay. Good visibility of these mooring ropes will prevent people from tripping over and thus accidents to happen. Advantages are improved visibility of the complete rope or the eye of the rope (when only the eye splice cover is luminous) for the human eye when shooting the mooring rope in the dark, and also improved safety for tourists (who are commonly not accustomed to seagoing situations). Also aesthetics may be a factor in this respect. For cruise ships the contours of the vessel can be important and in the dark this may be a nice contrast. Floating mooring lines for e.g. fish ponds, will be visible in the water which may prevent vessels from running into the lines.

With respect to their construction, maritime ropes can be divided in three main different types of construction.

### 1) Plaited ropes, for instance 4×2 strands

This rope is a torque balanced rope that is made by a braiding technique called plaiting. In plaiting the braider has eight carriers, with four operating in each direction of rotation. However the carriers move in pairs, so the rope is like a braid of four twin strands. The directions of twist of the strands in the rope and the rope strands themselves are opposite, the rope yarns at the rope surface are essentially parallel to the rope axis.

Commercially available ropes that use this construction, and which can be modified to become light-emitting in accordance with the present invention are:
- Tipto Eight™, available from Lankhorst Ropes (NL), which comprises polyolefin tape twisted yarns.
- Euroflex™, available from Lankhorst Ropes (NL), which essentially consists of rope yarns that are made of polyolefin and polyester.
- Eurofloat™, available from Lankhorst Ropes (NL), which are ropes wherein the rope yarns are made from polyolefin and polyester.
- Astra Line™, such as the G62 8 Strand Rope Offshore, available from Oliveira (PT), which is similar to Euroflex.
- Orion Premium™, available from Oliveira (PT), which is similar to Eurofloat
- HSPP™, available from Lankhorst Ropes (NL), which comprises high strength PP yarns.
- Polypropylene Octoply™, available from Oliveira (PT), which comprise standard PP rope yarns.
- TiptoLon Octoply™, available from Lankhorst Ropes (NL), which comprise nylon rope yarns

These commercially available ropes are based on polyolefins, polyesters and/or polyamides.

### 2) Braided ropes, for instance 12×1 strands

In these ropes half of the carriers on the braider are moving the strands clockwise and half are moving anti-clockwise, while they also move in and out. These ropes have a hole down the center. Ropes that use this construction are:
- LankoForce™, available from Lankhorst Ropes (NL), which are based on dyneema yarns.
- Vela 12™, available from Oliveira (PT), which are based on dyneema yarns.

### 3) Jacketed ropes

These ropes present a load-bearing core and a braided jacket to protect the core from external abrasion. Ropes that use this construction are:
- LankoForce™ with polyester jacket (available from Lankhorst Ropes (NL)), comprise a LankoForce™ 12-string Dyneema™ core.
- LankoForce™ with Tipto™ jacket (available from Lankhorst Ropes (NL)), comprise a LankoForce™ 12-string Dyneema™ core.
- LankoForce™ with Dyneema™ jacket (available from Lankhorst Ropes (NL)), comprise a LankoForce™ 12-string Dyneema™ core.
- LankoTech (available from Lankhorst Ropes (NL)), comprise a aramid 12-strand rope in the core, with a braided jacket of polyester.
- StrongLine™ (available from Lankhorst Ropes (NL)), comprise a parallel core construction, protected by a braided jacket. Both core and jacket are made of polyester.
- Tipto Winchline™ (available from Lankhorst Ropes (NL)), comprise a 7 strand core protected by braided jacket. Both core and jacket are made of Tipto™ yarns.

These commercially available ropes are based on polyolefins, polyesters, polyaramides and/or Dyneema™.

### 4) Laid ropes

This is the oldest and still the most widely-used fiber rope construction. The strands are laid together by a twisting process. The lay of the strands is in the opposite direction of the lay of the rope yarns that make up the strands. The rope twist is the opposite of the strand twist. These ropes can be 3-strand or 4-strand construction. The most common his the 3-strand construction. Examples are:
- Euroflex™ 3-strand (available from Lankhorst Ropes (NL)), all the rope yarns are made of polyolefin and polyester.
- Astra line™ (available from Oliveira (PT)), which is similar to Euroflex™ 3 strand.
- Gripogreen™ (available from Lankhorst Ropes (NL)), which is based on polypropylene.
- Griporanje™ 3-strand (available from Lankhorst Ropes (NL)), which is based on polypropylene.

These commercially available ropes are based on polyolefins and/or polyesters.

In all of these commercially available ropes it is possible to change at least part of the outer yarns by yarns with luminescent behavior.

The disclosure can also be used in the production of other parts used in rope industry, such as splices and jackets, by making at least part of the outer fibers luminescent as described herein, as well as in extruded covers (typically comprising polyurethane).

### Example

Polyolefin tapes were produced using a conventional extrusion process using a blend of 70% PP and 30% high density polyethylene (HDPE). The marker tapes were extruded with 20% of a masterbatch containing a 50% load of phosphorescent material based on strontium oxide, resulting in a 10% load of strontium oxide.

The construction of the rope was a 4-strand combination rope. Each strand had a core of PP, the wire rope laid around it and finally the polyolefin yarns, including 3 marker tapes, covering the wire.

A phosphorescent masterbatch having the following composition was used.
- GCX 111278 (obtainable from RTP company, Winona, Minnesota (US)), which is a 50% loaded polypropylene Masterbatch that utilizes a class of newly developed phosphorescent (glow-in-the-dark) pigments which are based on strontium oxide aluminate chemistry.

The resulting rope glowed visibly under seawater under fishing conditions. Thus it had a very good visibility under water when applied as fishing rope. Also it had excellent weather and light fastness. The glow time could be as high as 8 hours.

## Claims

1. A fishing rope which is provided on at least part of its outer surface with a luminescent material, which fishing rope is a twined or laid rope comprising conventional yarns and one or more luminescent yarns intertwined with said conventional yarns, wherein at least part of the surface of said luminescent yarns comprise said luminescent material, and wherein said luminescent yarns comprise polyester having an improved transparency obtainable by extrusion using lower stretch ratios and/or faster cooling after extrusion than conventional yarns comprising polyester.

2. A fishing rope according to the previous claim, wherein said yarns comprise polyamides; polyesters; and/or polyolefins, such as polyethylene

3. A fishing rope according to any of the previous claims, wherein said luminescent yarns comprise polyethylene terephthalate (PET) and/or polylactic acid (PLA), preferably polyethylene terephthalate (PET).

4. A fishing rope according to any of the previous claims, wherein said luminescent material is a phosphorescent material.

5. A fishing rope according to claim 4, wherein said phosphorescent material is selected from the group consisting of radioisotopes; organic dyes; and combinations thereof.

6. A fishing rope according to claim 4, wherein said phosphorescent material is selected from compounds having a relatively short after glow time, such as copper, silver, bismuth activated (zinc) sulfides or combinations thereof.

7. A fishing rope according to claim 4, wherein said phosphorescent material is selected from compounds having a long after glow time, such as rare earth doped phosphors, such as alkaline earth aluminates, alkaline earth sulfides, alkaline earth silicates, or combinations thereof.

8. A fishing rope according to any of the previous claims, which fishing rope is a braided rope.

9. A fishing rope according to any of the previous claims, which has a braided mantle.

10. Use of a fishing rope according to any of the previous claims in fishing.

11. Use according to the previous claim, wherein said fishing is fly shoot fishing.

## Patentansprüche

1. Ein Angelseil, das wenigstens an einem Teil seiner Außenfläche mit einem Leuchtstoff versehen ist, wobei das Angelseil ein gewundenes oder gelegtes Seil ist, das herkömmliche Garne und ein oder mehr Lumineszenzgarne umfasst, die mit den herkömmlichen Garnen verflochten sind, wobei wenigstens ein Teil der Oberfläche der Lumineszenzgarne das Lumineszenzmaterial umfasst, und wobei die Lumineszenzgarne Polyester mit einer verbesserten Transparenz umfassen, die durch Extrusion unter Verwendung niedrigerer Streckverhältnisse und/oder schnelleres Abkühlen nach der Extrusion als herkömmliche Polyester enthaltende Garne erhältlich ist.

2. Angelseil nach dem vorhergehenden Anspruch, wobei die Garne Polyamide; Polyester; und/oder Polyolefine wie Polyethylen umfassen

3. Angelseil nach einem der vorhergehenden Ansprüche, bei dem die Lumineszenzgarne Polyethylenterephthalat (PET) und / oder Polylamidsäure (PLA), vorzugsweise Polyethylenterephthalat (PET) umfassen.

4. Angelseil nach einem der vorhergehenden Ansprüche, wobei der Leuchtstoff ein phosphoreszierendes Material ist.

5. Angelseil nach Anspruch 4, wobei das phosphoreszierende Material aus der Gruppe ausgewählt ist, bestehend aus Radioisotopen; organischen Farbstoffen; und Kombinationen davon.

6. Angelseil nach Anspruch 4, wobei das phosphoreszierende Material aus Verbindungen mit relativ kurzer Nachglühzeit, wie Kupfer, Silber, wismutaktivierte (Zink)sulfide oder Kombinationen davon ausgewählt ist.

7. Angelseil nach Anspruch 4, wobei das phosphoreszierende Material aus Verbindungen mit einer langen Nachglühzeit ausgewählt ist, wie mit seltenen Erden dotierten Leuchtstoffen, wie Erdalkalialuminaten, Erdalkalisulfiden, Erdalkalisilikaten oder Kombinationen davon.

8. Angelseil nach einem der vorhergehenden Ansprüche, wobei das Angelseil ein geflochtenes Seil ist.

9. Angelseil nach einem der vorhergehenden Ansprüche, das einen geflochtenen Mantel hat.

10. Verwendung eines Angelseils nach einem der vorhergehenden Ansprüche beim Angeln.

11. Verwendung nach dem vorangehenden Anspruch, wobei das Fischen das Flyshoot-Fischen ist.

## Revendications

1. Corde de pêche qui est pourvue d'un matériau luminescent sur au moins une partie de sa surface extérieure, laquelle corde de pêche est une corde retors ou toronnée comportant des fils classiques et un ou plusieurs fils luminescents entrelacés avec lesdits fils classiques, sachant qu'au moins une partie de la surface desdits fils luminescents se compose dudit matériau luminescent, et sachant que lesdits fils luminescents se composent de polyester ayant une transparence améliorée, pouvant être obtenus par extrusion en utilisant des taux d'étirage plus faibles et/ou un refroidissement plus rapide après l'extrusion que pour les fils classiques composés de polyester.

2. Corde de pêche selon la revendication précédente, dans laquelle lesdits fils se composent de polyamides, de polyesters et/ou de polyoléfines, telles que du polyéthylène.

3. Corde de pêche selon l'une quelconque des revendications précédentes, dans laquelle lesdits fils luminescents se composent de polyéthylène téréphtalate (PET) et/ou d'acide polylactique (PLA), de préférence de polyéthylène téréphtalate (PET).

4. Corde de pêche selon l'une quelconque des revendications précédentes, dans laquelle ledit matériau luminescent est un matériau phosphorescent.

5. Corde de pêche selon la revendication 4, dans laquelle ledit matériau phosphorescent est sélectionné dans le groupe constitué de radio-isotopes, de colorants organiques et de combinaisons de ceux-ci.

6. Corde de pêche selon la revendication 4, dans laquelle ledit matériau phosphorescent est sélectionné parmi des composés présentant une durée de luminescence résiduelle relativement courte, tels que le cuivre, l'argent, les sulfures (de zinc) activés au bismuth ou des combinaisons de ceux-ci.

7. Corde de pêche selon la revendication 4, dans laquelle ledit matériau phosphorescent est sélectionné parmi des composés présentant une durée de luminescence résiduelle longue, tels que les phosphores dopés aux terres rares, tels que les aluminates d'alcalino-terreux, les sulfures d'alcalino-terreux, les silicates d'alcalino-terreux ou des combinaisons de ceux-ci.

8. Corde de pêche selon l'une quelconque des revendications précédentes, laquelle corde de pêche est une corde tressée.

9. Corde de pêche selon l'une quelconque des revendications précédentes, qui présente une enveloppe tressée.

10. Utilisation d'une corde de pêche selon l'une quelconque des revendications précédentes, pour la pêche.

11. Utilisation selon la revendication précédente, où ladite pêche est la pêche à la mouche.
